# EUROPEAN PATENT SPECIFICATION

(11) **EP 1 148 804 B1**
(45) Date of publication and mention of the grant of the patent: **27.10.2004**
(21) Application number: 00905021.2
(22) Date of filing: 03.02.2000
(51) Int. Cl.: A47J 47/06, A47J 47/10, B65D 81/20

(54) **LID FOR RECIPIENTS**
DECKEL FÜR BEHÄLTER
COUVERCLE POUR RECIPIENTS

(30) Priority: 05.02.1999 IT MI990229
(43) Date of publication of application: 31.10.2001
(73) Proprietor: BIALETTI INDUSTRIE S.P.A., 28887 Omegna (IT)
(72) Inventor: IACCHETTI, Giulio, I-26012 Castelleone (IT); RANZONI, Francesco, I-25032 Chiari (IT)
(74) Representative: Long, Giorgio
(86) International application number: PCT/EP2000/000890
(87) International publication number: WO 2000/045688

(56) References cited:
- EP-A- 0 524 551
- FR-A- 1 572 948
- FR-A- 2 692 870
- US-A- 5 692 632

## Description

This invention refers to a lid for recipients which is destined to engage, in a removable manner, the mouth identified by the walls of a recipient such as, for example, a container for food, a saucepan and similar. The lid comprises a surface delimited by an edge suitable for contacting the walls of the recipient in correspondence with the mouth of the same so that the lid closes tightly on the recipient.

The use of recipients on which lids of the type described above are applied for the preservation of food is known. The aforesaid recipients are particularly indicated for the domestic preservation of both raw and cooked foods, that is to say, for preserving the foods for a few days, especially in refrigerators.

The requirement which must be met to obtain good preservation of food is to avoid contact of the same as much as possible with the outside environment so as to prevent possible contamination. The need to use lids which create a tight seal with the recipient derives from this.

At present, recipients suitable for meeting the aforesaid need are already supplied in combination with a lid specially designed and shaped to engage tightly with the mouth of the recipient. In substance, each lid is able to ensure the tight closure of the container for which it was designed.

The problem that food cannot be kept in the same saucepan it was cooked in can be immediately seen from the above, as saucepan lids generally do not provide a tight seal. As a consequence, the food to be preserved must be put into one of the aforesaid containers.

A further need which must be borne in mind during the preservation of foodstuffs, in the sense specified above, is that of minimizing the quantity of air in contact with the food during its preservation. This is because when the oxygen contained in it comes into contact with the surface of the food, it causes the known phenomena of oxidization which alter the organoleptic characteristics of the food. In this regard, it should also be noted that even limited surface oxidization of the food is clearly perceptible to the palate.

With reference to the lids and containers of the prior art, it should be noted that these, to the extent that they create a tight seal between them, have the drawback that they are unable to minimize the quantity of air contained in the recipient.
Document FR-A-269287 discloses a container with a lid comprising a surface delimited by an edge, wherein the surface yields elastically, and ball valve means to permit the passage of air through the surface.

Document US-A-5 692 632 discloses a lid according to the preamble of independent claim 1.

The problem behind this invention is to devise a lid for recipients, with structural and functional characteristics which meet the above mentioned requirements and, at the same time, overcome the drawbacks which have been mentioned with regard to the prior art.

This problem is solved by a lid for recipients in accordance with Claim 1.

Further characteristics and the advantages of the lid for recipients according to the invention will result from the description given below of a preferred illustrative embodiment, given by way of example and for non-limiting reasons, with reference to the attached figures, in which:

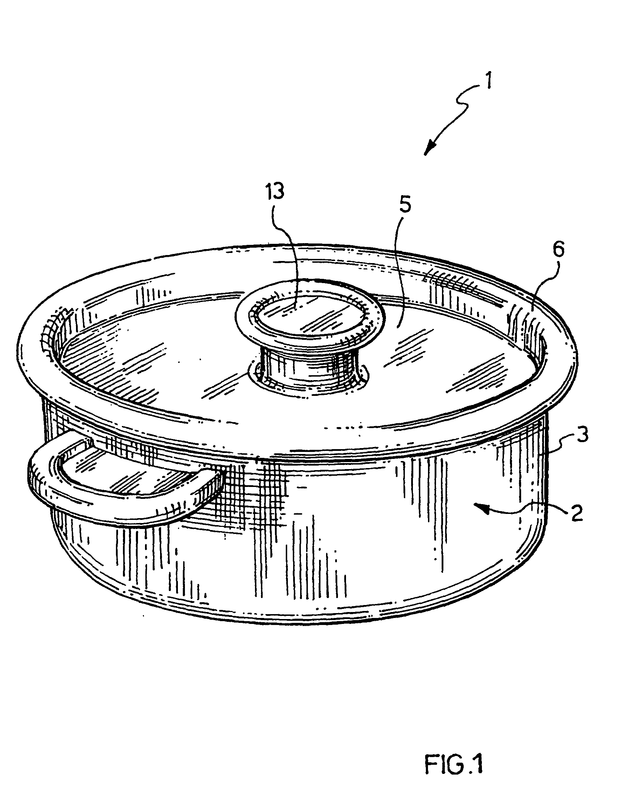

- Figure 1 shows a view in perspective of a lid according to the invention engaged with the mouth of a recipient;
- Figure 2 shows a side section view of the lid and the recipient in Figure 1;
- Figure 3 shows a side section view of the lid in Figure 2 before it engages with the mouth of the recipient;

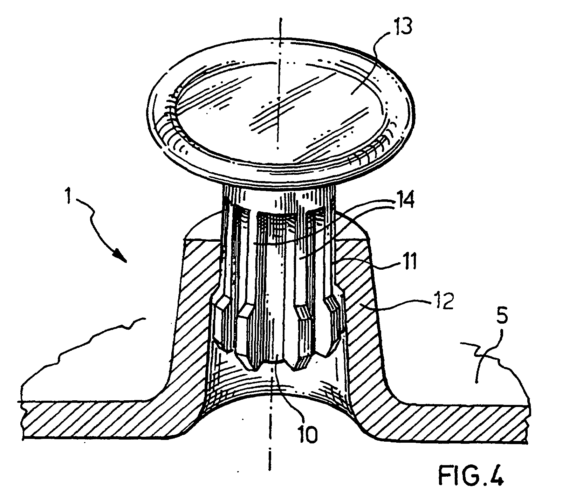

- Figure 4 shows a part-section perspective view of a detail of the lid in Figure 3;
- Figure 5 shows a side section view of the detail in Figure 4 in two different positions of use;
- Figure 6 shows a side section view of the lid in Figure 1 during the operation of engaging with the mouth of the recipient.

With reference to the figures from 1 to 6, 1 generically indicates a lid for a recipient 2 which, in the example, takes the concrete form of a saucepan.

In a completely conventional manner, the recipient 2 comprises a circular bottom and sidewalls 3 which define a mouth 4.

The lid 1 comprises a discoid surface 5 and is suitable for engaging the mouth 4 of the recipient 2 in a removable manner, in such a way as to create a tight seal on it. For this purpose, the surface 5 of the lid has a perimetrical edge 6 suitable for making a tight contact with the walls 3 of the recipient 2.

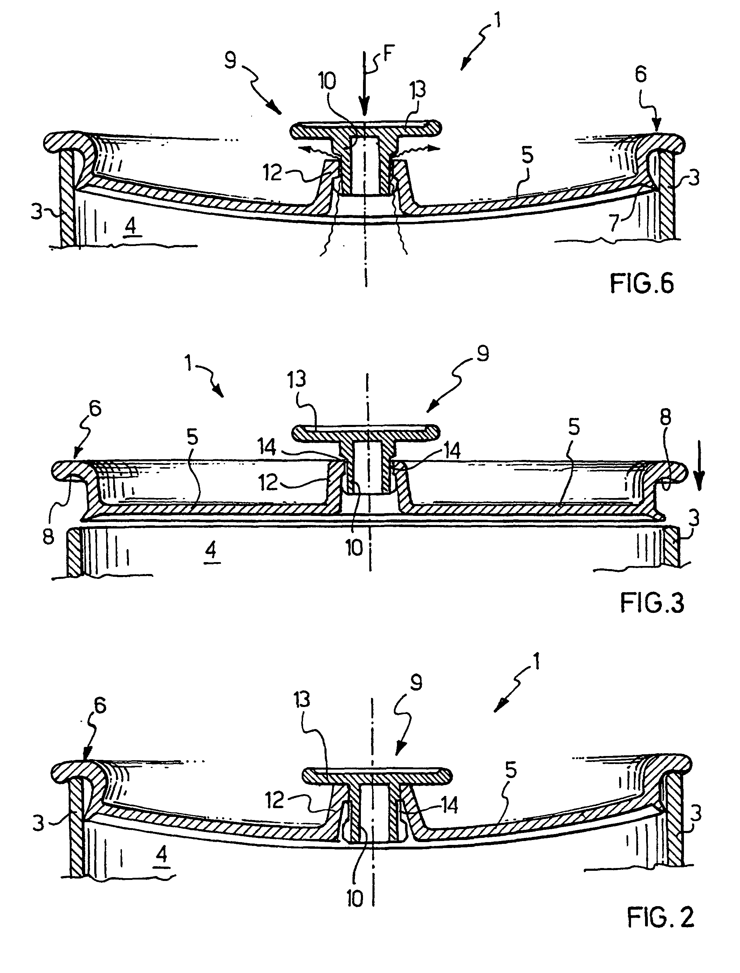

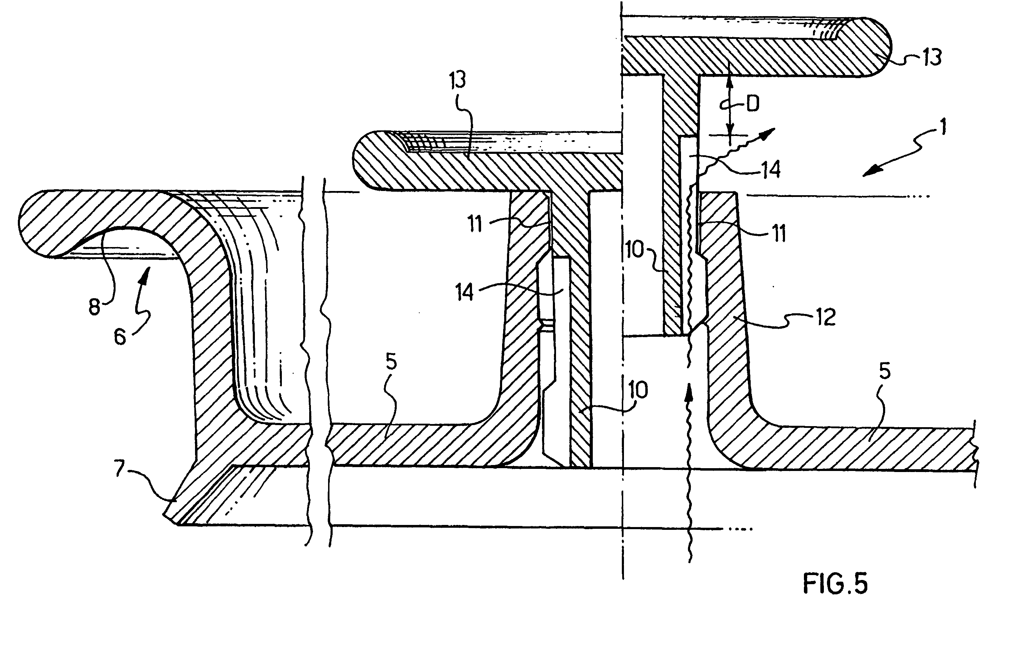

More precisely, the edge 6 comprises a sealing lip 7 which, when the lid 1 is engaged with the mouth 4 of the recipient 2 (Fig. 2), is inserted with force into the mouth 4, in such a way as to make contact with the walls 3 and act like a sealing gasket.

Furthermore, the edge 6 comprises a ledge surface 8 extended around the entire circumference, which is positioned above the sealing lip 7 and is suitable for abutting against the top end of the walls 3 of the container 2. When it abuts against the walls 3, the ledge surface 8 makes it possible to limit the insertion of the lid 1 in the mouth 4 of the recipient 2, as shown by the Figures 2 and 6.

The lid 1 is preferably made of plastic material and, thanks to its discoid shape, can yield elastically. With particular reference to Figure 6, it is possible to see that by stressing the lid with a force directed perpendicularly downwards (indicated by the arrow F in the figure), the lid 1 deforms by inflection until it takes a concave configuration after the ledge surface 8 has abutted against the walls 3 of the recipient 2.

The lid 1 comprises valve means 9 which permit the passage of air through the surface 5 during the operation of engaging the lid 1 with the mouth 4 of the recipient 2, in such a way as to reduce the quantity of air contained in the recipient 2.

The valve means 9 are positioned in the centre of the lid 1 and, according to the invention, take the concrete form of an obturator 10 inserted in a complementary obturator seat 11. The obturator 10 can be actuated in the seat 11 between a closed position (Fig. 2) and an open position (Fig. 3), in which the passage of air through the valve means 9, and therefore through the surface 5, is impeded and permitted, respectively.

In the example, the cylindrical seat takes the concrete form of a portion of internal surface of a cylindrical sleeve 12 obtained in a single piece with the surface 5. The sleeve 12 extends from the surface 5 upwards. The inside of the sleeve 12 defines a cylindrical through passage.

The obturator 10 takes the concrete form of a cylindrical body inserted movably in the seat 11, that is to say in the sleeve 12, between a top position (Fig. 3) and a bottom position (Fig. 2) which, as will become clearer later on in the description, correspond to the aforesaid open and respectively closed positions of the valve means 9.

The top end of the obturator 10 terminates in a knob 13 which is external with respect to the sleeve 12 and makes it possible to actuate the obturator inside the seat between the aforesaid open and closed positions, that is to say top and bottom.

Grooves 14 extended axially starting from a predetermined distance D from the knob 13 and up to the free bottom end of the obturator 10 are obtained in the external side surface of the obturator 10.

As shown in Figure 5, when the obturator 10 is in the closed position, it is completely inserted into the sleeve 12 in such a way as to obstruct the seat 11 completely and ensure tightness.

Alternatively, when the obturator 10 is in the open position, it is partially extracted from the seat 11. In this condition, the grooves 14 impede any tight engagement between the side surface of the obturator 10 and that of the seat 11. In substance, the grooves 14 come to constitute vents through which the passage of air through the seat 11, that is to say, through the valve means 9 and therefore through the surface 5 of the lid 1, is obtained.

In the closed (bottom) position, the end-of-stroke position of the obturator is determined by the fact that the knob 13 comes to abut against the top end of the sleeve 12.

In the open (top) position, the end-of-stroke of the obturator is ensured by an external radial protrusion provided on the free bottom end of the obturator 10, which protrusion comes to abut against an internal step formed in the sleeve 12.

In the use of the lid 1, that is, when it is desired to engage the same with the mouth 4 of the recipient 2 to achieve tight closure, it is sufficient to position the lid 1 on the recipient 2 in such a way that it is centred with respect to the mouth 4. At the same time, it is necessary to make sure that the obturator 10 is in the open (top) position.

Then, by manually stressing the lid 1 with a force directed perpendicularly downwards (indicated by the arrow F in Figure 6), the lid 1 is inserted into the mouth of the recipient 2 until the ledge surface 8 comes to abut against the top end of the walls 3 of the container 2. At the same time, the sealing lip 7 comes into contact with the walls 3 of the recipient, acting as a sealing gasket.

Continuing to stress the lid 1 in the manner indicated above, the same begins to be deformed elastically by inflection until it takes a concave configuration (Fig. 6). The inflection of the lid 1 makes it possible to expel the air from the recipient through the valve means 9, that is to say to reduce the quantity of air contained in the recipient 2.

At this point, it is sufficient to act on the knob 13 in such a way as to bring the obturator 10 into the closed position (Fig. 2). By so doing, a tight seal is created between the lid 1 and the mouth 4 of the recipient 2. As a result of the vacuum which comes to be created inside the recipient 2, the lid 1 stays in the aforesaid concave configuration even if it is no longer stressed manually.

The insertion of the obturator 10 into the seat 11 is achieved with a predetermined degree of force, selected in such a way that the force required to obtain the deformation by inflection of the lid 1 is lower than that required to obtain actuation from the open (top) position to the closed (bottom) position of the obturator 10. This makes it possible to carry out the operation of engagement of the lid 1 with the mouth 4 of the recipient 2 by acting on the knob 13 with one hand only.

To remove the lid 1 from the recipient 2, it is sufficient to act on the knob 13 in such a way as to bring the obturator from the closed (bottom) position to the open (top) one. This determines the entrance of air into the recipient through the vents formed by the grooves 14, in such a way that the lid 1 can be raised easily and removed from the recipient.

As can be appreciated from the above, the lid according to the invention makes it possible to meet the aforesaid needs and to overcome the drawbacks mentioned with regard to the prior art. In fact, as has been explained, the lid according to the invention ensures the tight closure of the recipient. Furthermore, during the operation of engagement of the lid with the mouth of the recipient, the lid makes it possible to evacuate part of the air contained in the recipient, in such a way as to minimize the quantity of air in contact with the food.

Another advantage of the lid according to the invention is in the fact that the same is suitable for being engaged with the mouth of a conventional recipient such as a saucepan or similar, permitting the preservation of the food in the same container it is cooked in.

A further advantage of the lid according to the invention is in its structural and functional simplicity.

Obviously, a person skilled in the art, for the purposes of satisfying contingent and specific requirements, will be able to make numerous modifications and variations to the lid for recipients described above, all, among other things, contained in the context of protection of the invention as defined in the claims which follow.

In this way, for example, it is evident that with variations in the form of the mouth of the recipient, the form of the lid will be varied in a corresponding manner. In other words, it is possible to make lids of elliptical, rectangular and other shapes for containers with mouths having these shapes.

## Claims

1. Lid for recipients which is designed to engage, in a removable manner, the mouth (4) identified by the walls (3) of a recipient (2), of the type comprising a surface (5) delimited by an edge (6) suitable for making contact with the walls (3) of the recipient (2) in correspondence with the mouth (4) to create a tight seal, wherein the surface (5) of the lid (1) yields elastically and the lid (1) comprises valve means (9) to permit the passage of air through the surface (5) of the lid (1) during the operation of engagement of the lid (1) with the mouth (4) of the recipient (2), permitting the evacuation of air contained in the recipient (2), wherein the valve means (9) comprise an obturator (10) inserted into an obturator seat (11) and which can be actuated in said seat (11) between a closed position and an open position, in which the passage of air through the valve means (9) is impeded and permitted respectively, **characterized in that** the insertion of the obturator (10) into the seat deforms by inflection the surface (5) of the lid (1) producing the evacuation of air contained in the recipient (2) and is achieved with a predetermined degree of force selected in such a way that the force required to obtain the deformation by inflection of the lid (1) is lower than the force required to obtain the actuation from the open position to the closed position of the obturator (10).

2. Lid according to Claim 1, wherein said obturator (10) moves slidably in said obturator seat (11) between the closed position and the open position.

3. Lid according to Claim 1, wherein said obturator (10) comprises a cylindrical body and the obturator seat (11) comprises a complementary cylindrical seat in which the obturator (10) moves slidably between the closed position, in which the obturator (10) is inserted into the obturator seat (11), and the open position, in which the obturator (10) is partially extracted from the obturator seat (11), the surface of the obturator (10) comprising at least one groove (14) acting as a vent to permit the passage of air through the obturator seat (11) when the obturator (10) is partially extracted from the obturator seat (11).

4. Lid according to Claim 3, wherein a knob (13) is associated with said obturator (10) and by means of which the obturator (10) can be actuated between the closed position and the open position.

5. Lid according to Claim 1, wherein said edge (6) comprises a sealing lip (7) suitable for acting as a gasket to ensure the tight closure of the lid (1) with the recipient (2).

6. Lid according to Claim 5, wherein said sealing lip (7) is suitable for being inserted under pressure into the mouth (4) of the recipient (2).

7. Lid according to Claim 5, wherein said edge (6) comprises a ledge surface (8) suitable for abutting against the walls (3) of the recipient (2) during the operation of engagement of the lid (1) with the mouth (4) of the recipient (2), to limit the insertion of the lid (1) into the mouth (4) of the recipient (2).

8. Lid according to Claim 5, having a discoid shape.

9. Lid according to Claim 1, wherein the surface (5) of the lid (1) when it yields elastically by inflection arranges itself in a concave form being stressed by a force (F) perpendicular to it applied through the obturator (10).

## Patentansprüche

1. Deckel für Behälter, derart konstruiert, um in einer abnehmbaren Weise in die Öffnung (4) einzugreifen, die durch die Wände (3) eines Behälters (2) definiert ist, von dem Typ, der eine Oberfläche (5) umfasst, die durch eine Kante (6) begrenzt ist, welche geeignet ist, die Wände (3) des Behälters (2) entsprechend der Öffnung (4) zu berühren, um eine dichte Abdichtung zu erzeugen, wobei die Oberfläche (5) des Deckels (1) elastisch nachgibt und der Deckel (1) eine Ventileinrichtung (9) umfasst, um das Durchtreten von Luft durch die Oberfläche (5) des Deckels (1) während der Eingriffsfunktion des Deckels (1) mit der Öffnung (4) des Behälters (2) zu ermöglichen, was ein Entweichen der in dem Behälter (2) enthaltenen Luft ermöglicht, wobei die Ventileinrichtung (9) ein in einen Dichtungssitz (11) eingesetztes Absperrorgan (10) umfasst, das in dem Dichtungssitz (11) zwischen einer geschlossenen Position und einer offenen Position betätigt werden kann, in welchen das Durchtreten von Luft durch die Ventileinrichtung (9) jeweils verhindert bzw. ermöglicht wird, **dadurch gekennzeichnet, dass** das Einsetzen des Absperrorgans (10) in den Dichtungssitz die Oberfläche (5) des Deckels (1) durch Flexion verformt, was das Entweichen von in dem Behälter (2) enthaltener Luft erzeugt und dass dies mit einem vorbestimmten Grad an Kraft erreicht wird, ausgewählt in einer solchen Weise, dass die Kraft, die erforderlich ist, um die Verformung des Deckels (1) durch Flexion zu erhalten, geringer ist als die Kraft, die erforderlich ist, um die Betätigung des Absperrorgans (10) von der offenen Position zur geschlossenen Position zu erhalten.

2. Deckel nach Anspruch 1, wobei das Absperrorgan (10) sich gleitend in dem Dichtungssitz (11) zwischen der geschlossenen Position und der offenen Position bewegt.

3. Deckel nach Anspruch 1, wobei das Absperrorgan (10) einen zylindrischen Körper umfasst und der Dichtungssitz (11) eine dazu passende zylindrische Aufnahme umfasst, in welcher sich das Absperrorgan (10) gleitend zwischen der geschlossenen Position, in welcher das Absperrorgan (10) in den Dichtungssitz (11) eingesetzt ist, und der offenen Position, in welcher das Absperrorgan (10) teilweise aus dem Dichtungssitz (11) herausgezogen ist, bewegt, wobei die Oberfläche des Absperrorgans (10) zumindest eine Nut (14) umfasst, die als Entlüftungsöffnung dient, um das Durchtreten von Luft durch den Dichtungssitz (11) zu erlauben, wenn das Absperrorgan (10) teilweise aus dem Dichtungssitz (11) herausgezogen ist.

4. Deckel nach Anspruch 3, wobei ein Knauf (13) mit dem Absperrorgan (10) verbunden ist, mittels welchem das Absperrorgan (10) zwischen der geschlossenen Position und der offenen Position betätigt werden kann.

5. Deckel nach Anspruch 1, wobei die Kante (6) eine Dichtlippe (7) umfasst, die geeignet ist, als eine Dichtung zu wirken, um das dichte Schließen des Deckels (1) am Behälter (2) sicherzustellen.

6. Deckel nach Anspruch 5, wobei die Dichtlippe (7) geeignet ist, unter Druck in die Öffnung (4) des Behälters (2) eingesetzt zu werden.

7. Deckel nach Anspruch 5, wobei die Kante (6) eine vorspringende Oberfläche (8) umfasst, die geeignet ist, um an den Wänden (3) des Behälters (2) während der Eingriffsfunktion des Deckels (1) mit der Öffnung (4) des Behälters (2) anzuliegen, um das Einsetzen des Deckels (1) in die Öffnung (4) des Behälters (2) zu beschränken.

8. Deckel nach Anspruch 5 mit einer scheibenförmigen Form.

9. Deckel nach Anspruch 1, wobei die Oberfläche (5) des Deckels (1), wenn sie durch Flexion elastisch nachgibt, sich selbst in einer konkaven Form anordnet, wobei sie durch eine dazu senkrechte Kraft (F) , die durch das Absperrorgan (10) aufgebracht wird, belastet ist.

## Revendications

1. Couvercle pour récipients qui est conçu pour mettre en prise, d'une manière amovible, l'embouchure (4) identifiée par les parois (3) d'un récipient (2), du type comprenant une surface (5) délimitée par un bord (6) adapté pour créer un contact avec les parois (3) du récipient (2) en correspondance avec l'embouchure (4) pour créer un joint étanche, dans lequel la surface (5) du couvercle (1) cède de manière élastique et le couvercle (1) comprend des moyens formant soupape (9) pour permettre le passage de l'air à travers la surface (5) du couvercle (1) pendant l'opération de mise en prise du couvercle (1) avec l'embouchure (4) du récipient (2), permettant l'évacuation de l'air contenu dans le récipient (2), dans lequel les moyens formant soupape (9) comprennent un obturateur (10) inséré dans un logement d'obturateur (11) et qui peut être actionné dans ledit logement (11) entre une position ouverte et une position fermée, dans lequel le passage d'air à travers les moyens formant soupape (9) sont bloqués et autorisés respectivement, **caractérisé en ce que** l'insertion de l'obturateur (10) dans le logement déforme par inflexion la surface (5) du capot (1) produisant l'évacuation de l'air contenu dans le récipient (2) et est obtenu avec un degré prédéterminé de force sélectionné d'une telle manière que la force requise pour obtenir la déformation par inflexion du couvercle (1) est inférieure à la force requise pour obtenir l'actionnement depuis la position ouverte vers la position fermée de l'obturateur (10).

2. Couvercle selon la revendication 1, dans lequel ledit obturateur (10) se déplace par glissement dans ledit logement d'obturateur (11) entre la position fermée et la position ouverte.

3. Couvercle selon la revendication 1, dans lequel ledit obturateur (10) comprend un corps cylindrique et le logement d'obturateur (11) comprend un logement cylindrique complémentaire dans lequel l'obturateur (10) se déplace en glissement entre la position fermée, dans laquelle l'obturateur (10) est inséré dans le logement d'obturateur (11), et la position ouverte, dans laquelle l'obturateur (10) est extrait partiellement du logement d'obturateur (11), la surface de l'obturateur (10) comprenant au moins une rainure (14) agissant comme un évent pour permettre le passage de l'air à travers le logement d'obturateur (11) lorsque l'obturateur (10) est extrait partiellement du logement d'obturateur (11).

4. Couvercle selon la revendication 3, dans lequel un bouton (13) est associé audit obturateur (10) et au moyen duquel l'obturateur (10) peut être actionné entre la position fermée et la position ouverte.

5. Couvercle selon la revendication 1, dans lequel ledit bord (6) comprend une lèvre d'étanchéité (7) adaptée pour agir comme un joint d'étanchéité pour garantir la fermeture hermétique du couvercle (1) avec le récipient (2).

6. Couvercle selon la revendication 5, dans lequel ladite lèvre d'étanchéité (7) est adaptée pour être insérée sous pression dans l'embouchure (4) du récipient (2).

7. Couvercle selon la revendication 5, dans lequel ledit bord (6) comprend une surface de couche (8) adaptée pour venir en butée contre les parois (3) du récipient (2) pendant l'opération de mise en prise du couvercle (1) avec l'embouchure (4) du récipient (2), pour limiter l'insertion du couvercle (1) dans l'embouchure (4) du récipient (2).

8. Couvercle selon la revendication 5, présentant une forme discoïde.

9. Couvercle selon la revendication 1, dans lequel la surface (5) du couvercle (1), lorsqu'elle cède de manière élastique par inflexion, s'agence dans une forme concave étant contrainte par une force (F) perpendiculaire à elle appliquée à travers l'obturateur (10).
